# EUROPÄISCHE PATENTANMELDUNG

(11) **EP 4 685 180 A1**
(43) Veröffentlichungstag der Anmeldung: **28.01.2026**
(21) Anmeldenummer: 25183912.2
(22) Anmeldetag: 19.06.2025
(51) Int. Cl.: C08L 9/00, B60C 1/00, C08K 3/04, C08K 3/06, C08L 91/00

(54) **DISPERSION UND DEREN VERWENDUNG**

(30) Priorität: 22.07.2024 DE 102024206857
(71) Anmelder: Continental Reifen Deutschland GmbH, 30175 Hannover (DE)
(72) Erfinder: Kallungal Abdul Jaleel, Muhamed Jesbeer, 30175 Hannover (DE); Cai, Xiaoke, 30175 Hannover (DE); Kendziorra, Norbert, 30175 Hannover (DE)
(74) Vertreter: Continental Corporation

(57) **Zusammenfassung**

Die Erfindung betrifft eine Dispersion, aufweisend zumindest Dienpolymere, Vulkanisationschemikalien, Füllstoff und Weichmacheröl mit einem Siedepunkt von mehr als 160 °C, mit einer dynamischen Viskosität η bei 25 °C und bei einer Schergeschwindigkeit von 20 s⁻¹ von weniger als 35 Pa*s für die Bereitstellung elektrisch leitfähiger Passagen in Fahrzeugreifen, die
- 25 - 50 phr (Gewichtsteile, bezogen auf 100 Gewichtsteile der gesamten Kautschuke in der Mischung) zumindest eines Polyisoprens mit einem mittleren Molekulargewicht M_{w} von 200000 bis 600000 g/mol,
- 35 - 60 phr zumindest eines flüssigen Dienpolymers mit einem mittleren Molekulargewicht M_{w} von 15000 bis 60000 g/mol
- 5 - 20 phr zumindest eines Polybutadiens,
- 40 - 60 phr zumindest eines Rußes mit eine BET-Oberfläche von 800 bis 1200 m²/g und eine DBP-Zahl von 350 bis 450 cm³/ 100 g,
- 400 bis 600 phr zumindest eines paraffinischen Weichmacheröls,
- und ein auf Schwefel basierendes Vulkanisationssystem, aufweisend zumindest 2 phr zumindest eines Vulkanisationsbeschleunigers,
enthält.

Ferner betrifft die Erfindung die Verwendung einer solchen Dispersion zur Herstellung elektrisch leitfähiger Passagen in Fahrzeugreifen.

## Beschreibung

Die Erfindung betrifft eine Dispersion, aufweisend zumindest Dienpolymere, Vulkanisationschemikalien, Füllstoff und Weichmacheröl mit einem Siedepunkt von mehr als 160 °C, mit einer dynamischen Viskosität η bei 25 °C und bei einer Schergeschwindigkeit von 20 s⁻¹ von weniger als 35 Pa*s für die Bereitstellung elektrisch leitfähiger Passagen in Fahrzeugreifen. Ferner betrifft die Erfindung die Verwendung einer solchen Dispersion zur Herstellung elektrisch leitfähiger Passagen in Fahrzeugreifen.

Es ist bekannt und üblich, die zur Reifenfertigung erforderlichen Gummibauteile aus Kautschukmischungen unterschiedlicher Zusammensetzungen zu fertigen, um die Eigenschaften der Gummibauteile an ihre jeweiligen Anforderungen im fertigen Reifen anzupassen. Dabei ist es üblich, zur Erzielung eines niedrigen Rollwiderstandes und eines guten Nassgriffes hochgefüllte Kieselsäuremischungen für den Laufstreifen oder zumindest für den mit der Fahrbahn in Berührung kommenden Teil des Laufstreifens, die sogenannte Laufstreifencap, zu verwenden. Seitenwände aus Kieselsäure gefüllten Kautschukmischungen sind ebenfalls für einen niedrigen Rollwiderstand von Vorteil. Der Einsatz von Kieselsäure in der Gürtelgummierung ist wegen des erhöhten Weiterreißwiderstands für die Schnitt- und Rissbeständigkeit der Gürtelgummierung günstig.

Aus mit Kieselsäure gefüllten Kautschukmischungen gefertigte Reifenbauteile weisen gegenüber Reifenbauteilen aus ausschließlich mit Ruß gefüllten Kautschukmischungen eine deutlich geringere elektrische Leitfähigkeit auf, sodass Maßnahmen zur Ableitung der beim Fahren auftretenden elektrostatischen Aufladungen erforderlich sind. Hierzu ist es beispielsweise üblich, Laufstreifen mit Cap/Base-Aufbau mit einem sogenannten Carbon Center Beam, welcher meist ein in der Laufstreifencap eingebauter und über den Umfang des Reifens verlaufender elektrisch leitfähiger Gummistreifen ist, zu versehen. Dieser Gummistreifen wird in der Regel aus einer rußgefüllten Kautschukmischung gefertigt und ist mit einer elektrisch leitfähigen Laufstreifenbase in Kontakt. Für den Einsatz dieser Technologie ist es erforderlich, dass im Reifen zumindest eine elektrisch leitfähige Verbindung, ein "Leitweg", von der Reifenfelge zu dem beim Fahren mit dem Untergrund in Kontakt tretenden Laufstreifenteil besteht. Ein derartiger Leitweg kann eine elektrisch leitfähige Gürtelgummierung, eine elektrisch leitfähige Karkasseinlage oder eine elektrisch leitfähige Innenschicht und das mit der Felge in Kontakt trennende elektrisch leitfähige Hornprofil umfassen. Alternativ kann die Ableitung elektrostatischer Aufladungen auch über eine elektrisch leitfähige Seitenwand oder eine im Bereich der Seitenwand vorgesehene elektrisch leitfähige Passage, welche entweder direkt oder über weitere Reifenbauteile mit dem Hornprofil in Kontakt tritt, erfolgen.

Es sind aus der DE 10 2007 039 100 A1 und der DE 10 2007 039 101 A1 Verfahren bekannt, welche ein einfaches Einbringen von elektrisch leitfähigem Material in einen Laufstreifen gestatten sollen. Dabei wird ein extrudierter Laufstreifen in seiner Längsrichtung durchgeschnitten (DE 10 2007 039 100 A1) oder es wird nur ein Teil, insbesondere eine Hälfte, eines Laufstreifens extrudiert (DE 10 2007 039 101 A1). Nachfolgend wird an den gebildeten Schnittflächen bzw. an den Stirnflächen elektrisch leitfähiges Material angebracht und die Laufstreifenteile werden zusammengefügt. Als elektrisch leitfähige Materialien können eine elektrisch leitfähige Kautschukmischung oder eine Lösung, eine Paste, ein Pulver oder ein Granulat aus einem elektrisch leitfähigen Material verwendet werden. Wichtig ist, dass nach dem Zusammenfügen die Haltbarkeit der Grenzfläche zwischen unterschiedlichen Gummikomponenten gewährleistet ist und es nicht zu Rissbildung kommt.

Elektrisch leitfähige Suspensionen bzw. Lösungen aus leitfähigen Kautschukmischungen zur Bereitstellung leitfähiger Bereiche in Fahrzeugluftreifen sind z. B. aus der DE 10 2006 022 671 A1, der DE 10 2006 036 508 A1 und der DE 698 06 864 T2 bekannt. In der DE 10 2006 022 671 A1wird beispielsweise das leitfähige Material - Graphitpulver/Graphitstaub oder Rußpulver/Rußstaub - in Öl suspendiert und auf einen Materialstreifen aufgebracht, der später im Reifen eine leitfähige Struktur bildet. In der DE 10 2006 036 508 A1 wird vorgeschlagen, eine elektrisch leitfähige Suspension von leitfähigen Teilchen in Öl, vorzugsweise einem als Weichmacher eingesetzten Öl, in den Laufstreifen eines Rohreifens zu injizieren, wobei sich elektrisch leitfähige Passagen bilden. Die DE 698 06 864 T2 offenbart die Einbringung von Klebelösungen, hergestellt aus Rußmischungen in einem flüchtigen Lösemittel, in Schlitze im Reifenlaufstreifen zur Bildung leitfähiger Strukturen. Ferner sind leitfähige Tinten auf Wasserbasis bekannt. Auch in Benzin gelöste leitfähige Gummimischungen können zur Bildung leitfähiger Strukturen in Reifen eingesetzt werden.

In der EP 3 385 090 A1 werden Suspensionen, enthaltend zumindest Dienpolymere, Vulkanisationschemikalien, Weichmacheröl und Füllstoff, mit einer dynamischen Viskosität η bei 20 °C von weniger als 100 Pa*s für die Bereitstellung elektrisch leitfähiger Passagen in Fahrzeugreifen und Verfahren zur Herstellung der Suspension beschrieben. Die Suspensionen enthalten 50 Gew.-teile flüssiges Polyisopren, 50 Gew.-teile cis-Polyisopren, 42 Gew.-teile Ruß mit einer BET-Oberfläche von 375 m²/g (Ruß XPB 545, Orion Engineered Carbon) bzw. von 150 m²/g (Ruß Printex^{®} L6, Orion Engineered Carbon), 617 Gew.-teile Weichmacheröle und ein auf Schwefel basierendes Vulkanisationssystem, aufweisend 1,44 Gew.-teile zumindest eines Vulkanisationsbeschleunigers. Mit derartigen Suspensionen kann nicht immer eine ausreichende elektrische Leitfähigkeit bei guter Verklebung der Reifenbauteile erzielt werden. Außerdem sind derartige Suspensionen nicht in allen Produktionsverfahren zur Erzeugung eines leitfähigen Pfades in Reifen geeignet, insbesondere dann nicht, wenn der leitfähige Pfad erzeugt wird, indem die Suspension über eine Schlitzdüse im Extruderkopf im Laufstreifenrohling platziert wird.

Die DE 10 2022 206 165 A1 offenbart eine Dispersion, aufweisend zumindest Dienpolymere, Vulkanisationschemikalien, Weichmacheröl mit einem Siedepunkt von mehr als 160 °C und zumindest einen elektrisch leitfähigen Füllstoff, mit einer dynamischen Viskosität η bei 20 °C von weniger als 20 Pa*s für die Bereitstellung elektrisch leitfähiger Passagen in Fahrzeugreifen. Die Suspensionen enthalten 60 phr flüssiges Polyisopren, 20 phr cis-Polyisopren, 20 phr Polybutadien, 20 phr eines Rußes mit einer BET-Oberfläche von 88 m²/g, 60 phr eines weiteren Rußes mit einer BET-Oberfläche von 1000, m²/g (Gesamtmenge Ruß: 80 phr), 600 Gew.-teile Weichmacheröle und ein auf Schwefel basierendes Vulkanisationssystem, aufweisend 3 phr zumindest eines Vulkanisationsbeschleunigers. Es werden hohe Mengen an Ruß eingesetzt, um eine gute elektrische Leitfähigkeit zu gewährleisten. Dies führt allerdings dazu, dass die Dispersion eine hohe Viskosität aufweist, die eine Verwendung bei Verfahren, bei denen ein leitfähiger Pfad erzeugt wird, indem die Dispersion über eine Schlitzdüse im Extruderkopf im Laufstreifenrohling platziert wird, erschwert oder sogar unmöglich macht.

Der Erfindung liegt die Aufgabe zugrunde, eine Dispersion für die Bereitstellung elektrisch leitfähiger Passagen in Fahrzeugreifen bereitzustellen, welche eine verbesserte elektrische Leitfähigkeit aufweist, eine sichere Verklebung Laufstreifenmaterials gewährleistet und bezüglich der Materialeigenschaften, wie Steifigkeit und Festigkeit, dem umgebenden Laufstreifenmaterial angepasst ist.

Gelöst wird diese Aufgabe erfindungsgemäß dadurch, dass die Dispersion
- 25 - 50 phr (Gewichtsteile, bezogen auf 100 Gewichtsteile der gesamten Kautschuke in der Mischung) zumindest eines Polyisoprens mit einem mittleren Molekulargewicht M_{w} von 200000 bis 600000 g/mol,
- 35 - 60 phr zumindest eines flüssigen Dienpolymers mit einem mittleren Molekulargewicht M_{w} von 15000 bis 60000 g/mol
- 5 - 20 phr zumindest eines Polybutadiens,
- 40 - 60 phr zumindest eines Rußes mit eine BET-Oberfläche von 800 bis 1200 m²/g und eine DBP-Zahl von 350 bis 450 cm³/ 100 g,
- 400 bis 600 phr zumindest eines paraffinischen Weichmacheröls,
- und ein auf Schwefel basierendes Vulkanisationssystem, aufweisend zumindest 2 phr zumindest eines Vulkanisationsbeschleunigers,
enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke und flüssigen Dienpolymere bezogen.

Eine Dispersion ist hierbei ein heterogenes Gemisch aus flüssigen und festen Stoffen (disperse Phase), die fein verteilt in einem kontinuierlichen Stoff (Dispersionsmedium), hier paraffinisches Weichmacheröl, vorliegen.

Die BET-Oberflächen werden gemäß ASTM D 6556 und die DBP-Zahl gemäß ASTM D 2414 ermittelt.

Die Dispersion mit den genannten Substanzen in den angegebenen Mengen weist überraschenderweise durch den Einsatz eines Rußes mit einer sehr hohen BET-Oberfläche in Mengen ≤ 60 phr eine hohe elektrische Leitfähigkeit auf und kann gleichzeitig noch durch geringe Viskosität durch Pumpen gefördert werden. Sie kann daher dazu dienen können, leitfähige Pfade im Reifen zu erzeugen, die eine gesicherte Ableitung der beim Fahren auftretenden elektrostatischen Aufladungen gewährleisten. Ferner ist die Dispersion bezüglich ihrer Zusammensetzung so ausgebildet, dass sich nach der Vulkanisation Materialeigenschaften ergeben, die denen der umgebenden Laufstreifenmischung ähnlich sind, und sie bewirkt durch den Anteil an flüssigem Dienpolymer im Zusammenspiel mit einer hohen Vulkanisationsbeschleunigerkonzentration eine adhäsive Verklebung der Bauteile.

Das paraffinische Weichmacheröl in der Dispersion quillt die angrenzenden Mischungen auf, was zu einer besseren Polymerdurchdringung zwischen den einzelnen Komponenten führt. Der hohe Anteil Vulkanisationsbeschleuniger bewirkt eine schnelle und effektive Vernetzung bis hinein in die angrenzenden Bereiche. Dies führt zu einer verbesserten Grenzflächenhaltbarkeit im fertigen Reifen. Dies verbessert letztendlich die Haltbarkeit des Reifens.

Zusätzlich bietet die Dispersion gegenüber Dispersionen auf Basis organischer Lösemittel den Vorteil, dass die paraffinischen Weichmacheröle für die Dispergierung nahezu aller Elastomere geeignet sind und derartige Dispersionen ein höheres Maß an Arbeitssicherheit durch geringere Emissionen von Kohlenwasserstoffen und eine reduzierte Brennbarkeit und Explosionsgefahr aufweisen.

Außerdem ist die erfindungsgemäße Dispersion stabil und sedimentiert in üblichen Verarbeitungszeiträumen nicht. Sie ermöglicht die Einbringung von Schichten in Fahrzeugreifen, die eine Stärke von nur wenigen Mikrometern aufweisen.

Die erfindungsgemäße Dispersion enthält 25 bis 50 phr zumindest eines Polyisoprens mit einem mittleren Molekulargewicht M_{w} von 200000 bis 600000 g/mol. Dabei kann es sich um natürliches und/oder synthetisches Polyisopren handeln. Vorzugsweise wird wegen einer guten Löslichkeit in paraffinischen Weichmacherölen nicht vergällter Naturkautschuk und/oder synthetisches Polyisopren eingesetzt.

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Ferner ist auch ein Gemisch eines oder mehrerer natürlicher Polyisoprene mit einem oder mehreren synthetischen Polyisoprenen denkbar. Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden.

Die erfindungsgemäße Dispersion enthält ferner 35 - 60 phr zumindest eines flüssigen Dienpolymers mit einem mittleren Molekulargewicht M_{w} von 15000 bis 60000 g/mol. Demnach können auch mehrere Dienpolymere im Verschnitt eingesetzt werden. Die flüssigen Dienpolymere tragen zur Einstellung der Viskosität der Suspension und zur Vernetzung bei.

Als Dienpolymere werden Polymere bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei dem wenigstens einen Dienpolymer handelt es sich um natürliches Polyisopren und/oder synthetisches Polyisopren und/oder Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder FluorKautschuk und/oder Silikon-Kautschuk und/oder Polysulfid-Kautschuk und/oder Epichlorhydrin-Kautschuk und/oder Styrol-Isopren-Butadien-Terpolymer und/oder hydrierten Acrylnitrilbutadien-Kautschuk und/oder hydrierten Styrol-Butadien-Kautschuk. Die Dienpolymere können auch mit Modifizierungen und Funktionalisierungen endgruppenmodifiziert und/oder entlang der Polymerketten funktionalisiert sein.

Bevorzugt ist das flüssige Dienpolymer mit einem mittleren Molekulargewicht Mw von 15000 bis 60000 g/mol ein flüssiges Polyisopren. Dies führt zu einer besonders guten adhäsiven Verklebung der Reifenbauteile.

Die erfindungsgemäße Dispersion enthält 5 bis 20 phr zumindest eines Polybutadiens. Dies trägt zu einem besseren Vernetzungsverhalten bei. Bei dem Polybutadien (BR, Butadien-Kautschuk) kann es sich um alle dem Fachmann bekannten Typen mit einem Mw von 250000 bis 5000000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt. Das eingesetzte Polybutadien kann mit Modifizierungen und Funktionalisierungen endgruppenmodifiziert und/oder entlang der Polymerketten funktionalisiert sein. Bei der Modifizierung kann es sich um solche mit HydroxyGruppen und/oder Ethoxy-Gruppen und/oder Epoxy-Gruppen und/oder SiloxanGruppen und/oder Amino-Gruppen und/oder Aminosiloxan und/oder CarboxyGruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Die erfindungsgemäße Dispersion enthält 40 - 60 phr zumindest eines Rußes mit eine BET-Oberfläche von 800 bis 1200 m²/g und eine DBP-Zahl von 350 bis 450 cm³/ 100 g. Es können auch mehrere Ruße mit derartigen Oberflächen verwendet werden. Bei diesen Mengen und mit diesen Oberflächen scheint in der Dispersion ein für die elektrische Leitfähigkeit besonders geeignetes Füllstoffnetzwerk vorzuliegen. Vorzugsweise weist der Ruß eine hohe elektrische Leitfähigkeit auf.

Neben Ruß mit einer BET-Oberfläche von 800 bis 1200 m²/g und einer DBP-Zahl von 350 bis 450 cm³/ 100 g kann die Dispersion bis zu 5 phr zumindest eines weiteren Rußes enthalten, der eine BET-Oberfläche von 70 bis 100 m²/g und eine DBP-Zahl von 90 bis 140 cm³/ 100 g aufweist. Derartige Ruße tragen zu einer besonders guten Abriebbeständigkeit der Mischung nach Vulkanisation bei.

Die erfindungsgemäße Dispersion enthält 400 bis 600 phr zumindest eines paraffinischen Weichmacheröls. Paraffinische Weichmacheröle weisen einen Anteil an paraffinischen Kohlenwasserstoffen von mehr als 60 % auf. Sie gelten als gesundheitlich unbedenklich. Die Weichmacheröle diffundieren nach dem Auf- oder Einbringen auf bzw. in den Reifenrohling in die umgebenden Kautschukmischungen, die anderen Inhaltsstoffe der Dispersion bilden dann eine Schicht, die nach der Vulkanisation sowohl die mechanische Stabilität durch ein Polymernetzwerk als auch die elektrische Leitfähigkeit durch ein Netzwerk aus Ruß gewährleistet.

Vorzugsweise ist die erfindungsgemäße Dispersion frei von flüchtigen organischen Lösemitteln. Ein negativer Einfluss auf die Grenzflächenstabilität kann dadurch ausgeschlossen werden. Ferner erzielt man Vorteile im Hinblick auf die Arbeitssicherheit. Unter flüchtigen organischen Lösemitteln (im Englischen auch volatile organic compounds, kurz VOC genannt) werden solche Lösemittel verstanden, die bei Raumtemperatur oder höheren Temperaturen durch Verdampfen (umgangssprachlich "Verdunsten") in die Gasphase übergehen, also flüchtig sind.

Die erfindungsgemäße Dispersion enthält weiterhin ein auf Schwefel basierendes Vulkanisationssystem, aufweisend zumindest 2 phr zumindest eines Vulkanisationsbeschleunigers. In der Regel sind die Kautschukmischungen in Fahrzeugreifen mit Hilfe von Schwefel vernetzt, so dass sowohl die Dispersion als auch die umgebende Mischung im Fahrzeugreifen auf demselben Vernetzungssystem basieren.

Bei dem auf Schwefel basierenden Vulkanisationssystem handelt es sich um ein System aus Schwefel oder Schwefelspender, Vulkanisationsbeschleuniger und Zinkoxid sowie ggf. Vulkanisationsverzögerer.

Als schwefelspendende Substanz können dabei alle dem Fachmann bekannten schwefelspendenden Substanzen verwendet werden. Enthält die Suspension eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B. DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Die Vulkanisationsbeschleuniger können ausgewählt sein aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS) und/oder Tetrabenzylthiuramdisulfid (TBzTD). Besonders bevorzugt wird N-Cyclohexyl-2-benzothiazolsufenamid (CBS) als Vulkanisationsbeschleuniger eingesetzt.

Um die Verarbeitbarkeit der Dispersion weiter zu verbessern, weist sie eine dynamischen Viskosität η bei 25 °C und bei einer Schergeschwindigkeit von 20 s⁻¹ von weniger als 20 Pa*s auf, wobei die Dispersion
- 25 - 35 phr zumindest eines Polyisoprens mit einem mittleren Molekulargewicht M_{w} von 200000 bis 600000 g/mol,
- 50 - 60 phr zumindest eines flüssigen Dienpolymers mit einem mittleren Molekulargewicht M_{w} von 15000 bis 60000 g/mol
- 5 - 20 phr zumindest eines Polybutadiens,
- 50 - 60 phr zumindest eines Rußes mit eine BET-Oberfläche von 800 bis 1200 m²/g und eine DBP-Zahl von 350 bis 450 cm³/ 100 g,
- 520 bis 600 phr zumindest eines paraffinischen Weichmacheröls,
- und ein auf Schwefel basierendes Vulkanisationssystem, aufweisend zumindest 2 phr zumindest eines Vulkanisationsbeschleunigers,
enthält.

Zinkoxid dient als Aktivator für die Vulkanisation und kann auch in Form eines nanostrukturierten Zinkoxids eingesetzt werden.

Des Weiteren kann die Dispersion übliche Zusatzstoffe in üblichen Gewichtsteilen enthalten. Zu diesen Zusatzstoffen zählen beispielsweise
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie Fettsäuren (z. B. Stearinsäure) oder Zinkkomplexe wie z. B. Zinkethylhexanoat,
c) weitere Füllstoffe, wie z. B. Kieselsäure, Alumosilicate, Kreide, Stärke, Magnesiumoxid, Titandioxid, Kautschukgele, Graphene, Kohlenstoffnanofasern oder Kohlenstoffnanoröhrchen
d) Silankupplungsagenzien und
e) Wachse.

Neben Fahrzeugreifen kann die erfindungsgemäße Dispersion auch Verwendung finden in Gummibälgen, Förderbändern, Luftfedern, Gurten, Riemen, Schläuchen, Drucktüchern, Schwingmetallen oder Schuhsohlen.

Die erfindungsgemäße Dispersion kann nach dem Fachmann bekannten Verfahren hergestellt werden, wie sie beispielsweise in der EP 3 385 090 A1 beschrieben sind. Dabei werden die Anteile der festen Bestandteile der Dispersion in den flüssigen Bestandteilen (im Wesentlichen paraffinische Weichmacheröle flüssigen Dienpolymere) durch Rühren und/oder Schütteln und/oder Rütteln in einem ein oder mehrstufigen Prozess gelöst bzw. dispergiert. Dies kann auch über Vorlösungen oder Vordispersionen erfolgen.

Es lässt sich eine sehr homogene Dispersion erhalten, dadurch ergibt sich, dass die am Reifen nach der Vulkanisation gebildete leitfähige Passage über die gesamte Reifenlebensdauer ihre mechanische und elektrische Funktion behält.

Dies liegt darin begründet, dass die gleichmäßig verteilten Polymere, Ruße und Vulkanisationschemikalien eine gleichmäßig vernetzte Polymerstruktur nach der Vulkanisation bereitstellen. Die in der Dispersion vorhandenen Weichmacheröle diffundieren dabei im Wesentlichen vor der Vulkanisation in die umgebenden Kautschukmischungen und beeinflussen die gewünschten Reifeneigenschaften nicht. Durch die gleichmäßige Verteilung der Ruße wird ein sicherer leitfähiger Pfad zur Verfügung gestellt.

Die Dispersion kann problemlos durch Streichen, Aufsprühen, Injizieren oder über eine Schlitzdüse einem Extruderkopf auf Reifenbauteile aufgebracht oder in Reifenbauteile eingebracht werden.

Die Erfindung soll nun anhand von Ausführungsbeispielen im Zusammenhang mit der Tabelle 1 näher erläutert werden.

Zunächst wurden eine Kautschukmischungen gemäß Tabelle 1 ohne die Zugabe des Weichmacheröls in einem Kneter hergestellt. Anschließend wurde diese Mischungen mit den entsprechenden Mengen an paraffinischen Weichmacheröls (Catenex T 121, Shell) in einem Kneter zu einer homogenen Dispersion verarbeitet.

Die Dispersion wurde hinsichtlich folgender physikalischer Eigenschaften vermessen:
- dynamische Viskosität der η der Dispersion bei 20 °C und bei einer Schergeschwindigkeit von 20 s-1 gemäß DIN 53211
- elektrischer Widerstand der Dispersion bei Raumtemperatur mittels eines Isolationsmessgeräts Typ 1507 der Fa. Fluke, Einstellung: 1000 V, Messsonde mit zwei elektrisch leitenden Stiften, Abstand zwischen den Stiften: 15 mm, Durchmesser der Stifte: 3 mm, Länge der Stifte: 6 mm.

**Tabelle 1**

| **Bestandteile** | **Einheit** | **1(V)** | **2(E)** | **3(E)** |
|---|---|---|---|---|
| Polyisopren^{a} | phr | 47 | 47 | 30 |
| flüssiges Polyisopren^{b} | phr | 40 | 40 | 55 |
| BR^{c} | phr | 13 | 13 | 15 |
| Ruß N339^{d} | phr | 55 | - | - |
| Ruß Printex XE 2-B^{e} | phr | 10 | 45 | 55 |
| Zinkoxid | phr | 3 | 3 | 3 |
| Stearinsäure | phr | 2 | 2 | 2 |
| Alterungsschutzmittel | phr | 4 | 4 | 4 |
| Vulkanisationsbeschleuniger^{f} | phr | 3 | 3 | 3 |
| Schwefel | phr | 1,4 | 1,4 | 1,4 |
| paraffinisches Weichmacheröl^{g} | phr | 600 | 475 | 545 |

| **Eigenschaften** | | | | |
|---|---|---|---|---|
| dynamische Viskosität η | Pa*s | 12 | 30 | 12 |
| elektrischer Widerstand | Ω | 1*10¹¹ | < 1*10⁶ | < 1*10⁶ |

| | | | | |
|---|---|---|---|---|
| ^{a)} Naturkautschuk ^{b)} flüssiges synthetisches Polyisopren, LBR-307, Kuraray, M_{w} = 54000 g/mol ^{c)} low cis-BR ^{d)}Ruß N339, BET-Oberfläche gemäß ASTM D 6556: 88 m²/g, DBP-Zahl gemäß ASTM D 2414: 120 ml/ 100 g ^{e)} elektrisch leitfähiger Ruß Printex^{®} XE2-B, Orion Engineered Carbons, BET-Oberfläche gemäß ASTM D 6556: 1000 m²/g, DBP-Zahl gemäß ASTM D 2414: 420 ml/ 100 g, elektrische Leitfähigkeit: hoch ^{f)} CBS ^{g)} paraffinisches Weichmacheröl, Catenex T 121, Shell | | | | |

Aus der Tabelle 1 wird ersichtlich, dass die erfindungsmäßen Dispersionen mit den hohen Mengen an dem speziellen Ruß mit einer hohen Oberfläche einen niedrigen elektrischen Widerstand, d. h. eine hohe elektrische Leitfähigkeit, aufweisen.

Die wasser- und benzinfreien Dispersionen der Tabelle 1 wurden bei der Herstellung eines Fahrzeugreifenrohlings eingesetzt. Sie konnte problemlos in den Laufstreifen durch Streichen, Aufsprühen, Injizieren oder über eine Schlitzdüse im Extruderkopf eingebracht werden, wobei sich die Dispersion 3(E) durch die geringere Viskosität einfacher verarbeiten ließ. Werden Verfahren eingesetzt, bei denen der Laufstreifen durch die Aufbringung getrennt wird, bewirkt die Dispersion eine sofortige adhäsive Verbindung der getrennten Teile nach dem Wiederzusammenführen. Dies ist besonders von Vorteil, wenn die Dispersion über eine Schlitzdüse im Extruderkopf eingebracht wird.

Nach der Vulkanisation des Reifens war ein elektrisch leitfähiger Pfad innerhalb des Laufstreifens vorhanden, der eine sichere Ladungsableitung während des Fahrbetriebs ermöglichte. Dieser Pfad behielt auch über die gesamte Lebensdauer des Reifens seine elektrische und mechanische Funktion bei.

## Patentansprüche

1. Dispersion, aufweisend zumindest Dienpolymere, Vulkanisationschemikalien, Füllstoff und Weichmacheröl mit einem Siedepunkt von mehr als 160 °C, mit einer dynamischen Viskosität η bei 25 °C und bei einer Schergeschwindigkeit von 20 s⁻¹ von weniger als 35 Pa*s für die Bereitstellung elektrisch leitfähiger Passagen in Fahrzeugreifen,
wobei die Dispersion
- 25 - 50 phr (Gewichtsteile, bezogen auf 100 Gewichtsteile der gesamten Kautschuke in der Mischung) zumindest eines Polyisoprens mit einem mittleren Molekulargewicht M_{w} von 200000 bis 600000 g/mol,
- 35 - 60 phr zumindest eines flüssigen Dienpolymers mit einem mittleren Molekulargewicht M_{w} von 15000 bis 60000 g/mol
- 5 - 20 phr zumindest eines Polybutadiens,
- 40 - 60 phr zumindest eines Rußes mit eine BET-Oberfläche von 800 bis 1200 m²/g und eine DBP-Zahl von 350 bis 450 cm³/ 100 g,
- 400 bis 600 phr zumindest eines paraffinischen Weichmacheröls,
- und ein auf Schwefel basierendes Vulkanisationssystem, aufweisend
zumindest 2 phr zumindest eines Vulkanisationsbeschleunigers,
enthält.

2. Dispersion nach Anspruch 1, **dadurch gekennzeichnet, dass** sie eine dynamischen Viskosität η bei 25 °C und bei einer Schergeschwindigkeit von 20 s⁻¹ von weniger als 20 Pa*s aufweist, wobei die Dispersion
- 25 - 35 phr zumindest eines Polyisoprens mit einem mittleren Molekulargewicht M_{w} von 200000 bis 600000 g/mol,
- 50 - 60 phr zumindest eines flüssigen Dienpolymers mit einem mittleren Molekulargewicht M_{w} von 15000 bis 60000 g/mol
- 5 - 20 phr zumindest eines Polybutadiens,
- 50 - 60 phr zumindest eines Rußes mit eine BET-Oberfläche von 800 bis 1200 m²/g und eine DBP-Zahl von 350 bis 450 cm³/ 100 g,
- 520 bis 600 phr zumindest eines paraffinischen Weichmacheröls,
- und ein auf Schwefel basierendes Vulkanisationssystem, aufweisend zumindest 2 phr zumindest eines Vulkanisationsbeschleunigers,
enthält.

3. Dispersion nach Anspruch 1 oder 2, **dadurch gekennzeichnet, dass** zumindest eines der flüssigen Dienpolymere mit einem mittleren Molekulargewicht M_{w} von 15000 bis 60000 g/mol flüssiges Polyisopren ist.

4. Dispersion nach zumindest einem der vorhergehenden Ansprüche, **dadurch gekennzeichnet, dass** der zumindest eine Ruß mit einer BET-Oberfläche von 800 bis 1200 m²/g und einer DBP-Zahl von 350 bis 450 cm³/ 100 g eine hohe elektrische Leitfähigkeit aufweist.

5. Dispersion nach zumindest einem der vorhergehenden Ansprüche, **dadurch gekennzeichnet, dass** sie weniger als 5 phr zumindest eines weiteren Rußes enthält, der eine BET-Oberfläche von 70 bis 100 m²/g und eine DBP-Zahl von 90 bis 140 cm³/ 100 g aufweist.

6. Dispersion nach zumindest einem der vorhergehenden Ansprüche, **dadurch gekennzeichnet, dass** sie im Wesentlichen frei von flüchtigen organischen Lösemitteln ist.

7. Dispersion nach zumindest einem der vorhergehenden Ansprüche, **dadurch gekennzeichnet, dass** der Vulkanisationsbeschleuniger ein Sulfenamidbeschleuniger, ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS) und/oder Tetrabenzylthiuramdisulfid (TBzTD) ist.

8. Dispersion nach Anspruch 7, **dadurch gekennzeichnet, dass** der Vulkanisationsbeschleuniger N-Cyclohexyl-2-benzothiazolsufenamid (CBS) ist.

9. Verwendung einer Dispersion nach Anspruch 1 zur Herstellung elektrisch leitfähiger Passagen in Fahrzeugreifen.
